# DEMANDE DE BREVET EUROPEEN

(11) **EP 1 057 717 A1**
(43) Date de publication de la demande: **06.12.2000**
(21) Numéro de dépôt: 00401576.4
(22) Date de dépôt: 05.06.2000
(51) Int. Cl.: B62D 25/14, B62D 21/15, B62D 25/08

(54) **Berceau de poste de conduite monobloc pour chassis de véhicule automobile, et procédé de montage notamment d'un tel berceau sur un tel chassis**

(30) Priorité: 03.06.1999 FR 9906987
(71) Demandeur: Renault, 92100 Boulogne Billancourt (FR)
(72) Inventeur: Monteil, Michel, 78150 Le Chesnay (FR)

(57) **Abrégé**

Ce berceau de poste de conduite monobloc (B) pour châssis (C) de véhicule automobile, comprenant une platine (5) et une traverse (9), est remarquable en ce que ladite platine (5) et ladite traverse (9) sont reliées entre elles par des moyens déformables (11a, 11b).

## Description

La présente invention est relative à un berceau de poste de conduite monobloc pour châssis de véhicule automobile, et à un procédé de montage notamment d'un tel berceau sur un tel châssis.

On connaît du document EP 0 124 093 un berceau de poste de conduite monobloc pour châssis de véhicule automobile.

Le berceau enseigné par ce document comprend une platine et une traverse formées dans une même tôle pliée de manière appropriée, s'étendant sur toute la largeur du véhicule.

Il est indiqué qu'un tel berceau peut être assemblé et équipé préalablement à sa mise en place sur le châssis du véhicule, laquelle est effectuée par le haut depuis le compartiment du moteur.

Ainsi, d'une part on peut mettre en place en une seule et même opération la platine et la traverse sur le châssis du véhicule, et d'autre part on évite d'avoir à intervenir sur le berceau une fois qu'il est déjà installé sur le châssis.

Cela permet de simplifier considérablement le processus de montage de cette partie du véhicule, et par conséquent d'abaisser notablement les coûts de production.

Cependant, on a pu remarquer que la rigidité d'un tel berceau de poste de conduite était importante, au point qu'un recul de la platine en cas de choc était susceptible d'entraîner également un recul de la traverse dans l'habitacle du véhicule, au risque de blesser les passagers.

La présente invention a pour but de fournir un berceau de poste de conduite monobloc qui, tout en présentant les avantages du berceau susmentionné, n'en présente pas les inconvénients.

On atteint ce but de l'invention avec un berceau de poste de conduite monobloc pour châssis de véhicule automobile, comprenant une platine et une traverse, remarquable en ce que ladite platine et ladite traverse sont reliées entre elles par des moyens déformables.

Suivant d'autres caractéristiques du berceau selon l'invention:
- deux bretelles au moins en partie déformables fixées aux extrémités de ladite platine et de ladite traverse forment lesdits moyens déformables,
- des nervures de renforcement sont interposées entre lesdites bretelles et ladite traverse,
- lesdites bretelles et/ou lesdites nervures sont en acier emboutissable,
- ladite platine comprend au moins deux pions destinés à faciliter le guidage dudit berceau lors de sa mise en place sur ledit châssis.

Grâce à ces caractéristiques, on obtient un berceau de poste de conduite monobloc autorisant un certain recul de la platine en cas de choc sans qu'il y ait de recul de la traverse dans l'habitacle.

La présente invention a également pour but de fournir un procédé de montage d'un berceau de poste de conduite monobloc notamment conforme à ce qui précède sur le châssis d'un véhicule dont le profil de la carrosserie, et notamment le profil des montants avant, ne permet pas une mise en place de ce berceau par le haut.

On atteint ce but de l'invention avec un procédé de montage d'un berceau de poste de conduite notamment conforme à ce qui précède sur un châssis de véhicule automobile, remarquable en ce qu'il comprend les étapes consistant à:
- pré-assembler ledit berceau à l'extérieur dudit châssis,
- monter sur ce berceau des organes tels qu'une colonne de direction, un ensemble de climatisation/chauffage et des pédales de commande du véhicule,
- introduire ledit berceau latéralement par l'ouverture d'une porte dudit châssis,
- déplacer ledit berceau longitudinalement jusqu'à ce qu'il se positionne correctement sur ledit châssis, et à
- solidariser ledit berceau sur ledit châssis.

Suivant d'autres caractéristiques du procédé selon l'invention:
- on solidarise ledit berceau sur ledit châssis en fixant ladite platine et lesdits moyens déformables sur ce châssis,
- on fixe lesdites bretelles sur des pieds avant dudit châssis avec des moyens choisis dans le groupe comprenant les vis et les dispositifs de fixation à rattrapage de jeu,
- on fixe ladite platine par collage sur ledit châssis.

Grâce à ces caractéristiques, on peut monter un berceau de poste de conduite notamment conforme à ce qui précède sur un châssis de véhicule dont la carrosserie, et notamment les montants avant, ont un profil quelconque.

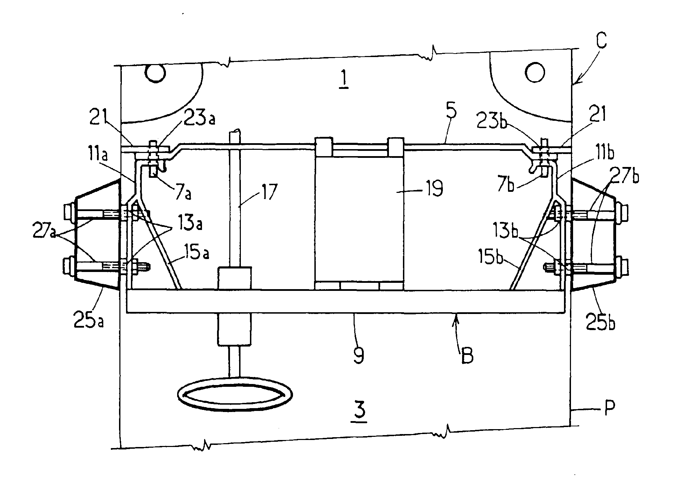

D'autres caractéristiques et avantages de la présente invention apparaîtront à la lecture de la description qui va suivre et à l'examen de l'unique figure du dessin annexé, représentant une vue de dessus schématique du berceau de poste de conduite monobloc selon l'invention lorsqu'il est monté sur le châssis (représenté partiellement) d'un véhicule automobile.

Sur cette figure, l'avant et l'arrière du véhicule sont respectivement situés vers le haut et vers le bas de la feuille.

On se reporte à présent à cette figure, sur laquelle les références B et C désignent respectivement le berceau selon l'invention et le châssis d'un véhicule automobile équipé de ce berceau.

Comme on peut le voir sur cette figure, le berceau B est placé entre le compartiment du moteur 1 et l'habitacle 3.

Il comprend une platine 5, formée par exemple par une plaque de tôle munie d'au moins deux pions de guidage en acier 7a, 7b, destinée à isoler le compartiment du moteur 1 de l'habitacle 3, et une traverse 9, formée par exemple par une poutre en tôle pliée, destinée à rigidifier la structure de l'habitacle.

Selon une caractéristique essentielle de l'invention, la platine 5 et la traverse 9 sont reliées entre elles par au moins deux bretelles 11a, 11b au moins en partie déformables, formées par exemple par des plaques de tôle en acier emboutissable.

Les bretelles 11a, 11b peuvent être fixées par tout moyen approprié sur la platine 5 et sur la traverse 9, notamment par soudage ou vissage.

Ces bretelles comprennent de préférence chacune plusieurs orifices 13a, 13b.

De manière préférée, des nervures de renforcement 15a, 15b formées dans le même acier que les bretelles 11a, 11b sont interposées entre ces bretelles et la traverse 9.

La platine 5 et la traverse 9 supportent différents organes tels qu'une colonne de direction 17, un ensemble de climatisation/chauffage 19 et des pédales de commande du véhicule (non représentées).

Le châssis C du véhicule comprend notamment un support de platine 21 muni de deux trous 23a, 23b, et deux pieds avant 25a, 25b, sur lesquels sont articulés les portières avant du véhicule (non représentées).

La platine 5 est fixée sur le support 21 de préférence par collage, les pions 7a, 7b étant engagés dans les trous 23a, 23b.

Les bretelles 11a, 11b sont fixées de préférence sur les pieds avant 25a, 25b par des vis 27a, 27b passant dans les orifices 13a, 13b.

En variante, ces bretelles peuvent être fixées sur les pieds avant avec un dispositif de fixation à rattrapage de jeu.

Les avantages du berceau selon l'invention résultent directement de la description qui précèdent.

En cas de choc notamment frontal, la platine 5 risque de reculer.

Dans ce cas, les bretelles 11a, 11b se plient principalement dans leur parties comprises entre le support 21 et les vis 27a, 27b, dissipant ainsi l'énergie qui leur est transmise.

Les parties de ces bretelles comprises entre les vis 27a, 27b et la traverse 9 demeurent à peu près immobiles, ce qui évite tout recul de la traverse 9 dans l'habitacle, garantissant ainsi la sécurité des passagers.

La structure monobloc du berceau selon l'invention et les nervures de renforcement 15a, 15b limitent par ailleurs les risques de rotation des pieds avant 25a, 25b en cas de choc notamment latéral, conférant ainsi une certaine rigidité à l'ensemble de l'habitacle.

Pour monter le berceau B selon l'invention sur le châssis C, on procède de la manière suivante.

On commence par pré-assembler la platine 5, la traverse 9 et les bretelles 11a, 11b, à l'extérieur du châssis C.

On monte ensuite sur ce berceau des organes tels que la colonne de direction 17, l'ensemble de climatisation/chauffage 19 et les pédales de commande du véhicule (non représentées).

On introduit ensuite de préférence ce berceau ainsi équipé latéralement par l'ouverture d'une porte (avant) P du châssis C, puis on le déplace longitudinalement jusqu'à ce que la platine 5 vienne s'appuyer sur le support 21, en utilisant les pions 7a, 7b et les trous 23a, 23b pour guider cet assemblage.

On fixe alors la platine 5 sur le support 21, par vissage ou collage (dans ce dernier cas, on aura préalablement préencollé les surfaces concernées), et on fixe les bretelles 11a, 11b sur les pieds avant 25a, 25b au moyen des vis 27a, 27b.

Ce procédé est très avantageux car il permet de mettre en place le berceau B sur le châssis C même lorsque le profil de la carrosserie du véhicule, et notamment celui des montants avant, empêche une mise en place par le haut.

Ce procédé permet en outre de réaliser de nombreuses opérations complexes, telles que l'installation de la colonne de direction 17 sur le berceau B, à l'extérieur du véhicule, améliorant ainsi l'ergonomie des postes de travail concernés.

Ce procédé permet également de mettre en place la platine 5 et la traverse 9 sur le châssis C en une seule opération, et de n'utiliser qu'un seul système de guidage (formé par les pions 7a, 7b) commun à ces deux éléments.

Lorsqu'on fixe la platine 5 par collage sur le support de platine 21, le procédé selon l'invention permet de s'affranchir de moyens de maintien de la platine 5 en attendant le séchage de la colle. Le maintien est en effet assuré par les bretelles 11a, 11b.

Ce procédé permet également de supprimer les écarts dimensionnels résultant de mises en place séparées de la platine 5 et de la traverse 9, facilitant ainsi le montage des organes s'étendant entre ces deux éléments, tels que la colonne de direction 17.

Bien entendu, la présente invention n'est pas limitée au mode de réalisation décrit et représenté, fourni à titre d'exemple illustratif et non limitatif.

C'est ainsi par exemple que l'on pourrait mettre en place le berceau selon l'invention sur le châssis par le haut comme cela est enseigné dans le document EP 0 124 093, si tant est que le profil de la carrosserie du véhicule s'y prête.

## Revendications

1. Berceau de poste de conduite monobloc (B) pour châssis (C) de véhicule automobile, comprenant une platine (5) et une traverse (9), caractérisé en ce que ladite platine (5) et ladite traverse (9) sont reliées entre elles par des moyens déformables (11a, 11b).

2. Berceau de poste de conduite (B) selon la revendication 1, caractérisé en ce que deux bretelles (11a, 11b) au moins en partie déformables fixées aux extrémités de ladite platine (5) et de ladite traverse (9) forment lesdits moyens déformables.

3. Berceau de poste de conduite (B) selon la revendication 2, caractérisé en ce que des nervures de renforcement (15a, 15b) sont interposées entre lesdites bretelles (11a, 11b) et ladite traverse (5).

4. Berceau de poste de conduite (B) selon l'une des revendications 2 ou 3, caractérisé en ce que lesdites bretelles (11a, 11b) et/ou lesdites nervures (15a, 15b) sont en acier emboutissable.

5. Berceau de poste de conduite (B) selon l'une quelconque des revendications précédentes, caractérisé en ce que ladite platine (5) comprend au moins deux pions (7a, 7b) destinés à faciliter le guidage dudit berceau (B) lors de sa mise en place sur ledit châssis (C).

6. Procédé de montage d'un berceau de poste de conduite (B) conforme à l'une quelconque des revendications précédentes sur un châssis (C) de véhicule automobile, caractérisé en ce qu'il comprend les étapes consistant à:
- pré-assembler ledit berceau (B) à l'extérieur dudit châssis (C),
- monter sur ce berceau (B) des organes tels qu'une colonne de direction (17), un ensemble de climatisation/chauffage (19) et des pédales de commande du véhicule,
- introduire ledit berceau (B) latéralement par l'ouverture d'une porte (P) dudit châssis (C),
- déplacer ledit berceau (B) longitudinalement jusqu'à ce qu'il se positionne correctement sur ledit châssis (C), et à
- solidariser ledit berceau (B) sur ledit châssis (C).

7. Procédé de montage selon la revendication 6 d'un berceau (B) conforme à l'une quelconque des revendications 1 à 5, caractérisé en ce qu'on solidarise ledit berceau (B) sur ledit châssis (C) en fixant ladite platine (5) et lesdits moyens déformables (11a, 11b) sur ce châssis (C).

8. Procédé de montage selon la revendication 7 d'un berceau (B) conforme à la revendication 2, caractérisé en ce qu'on fixe lesdites bretelles (11a, 11b) sur des pieds avant (25a, 25b) dudit châssis (C) avec des moyens choisis dans le groupe comprenant les vis et les dispositifs de fixation à rattrapage de jeu.

9. Procédé de montage selon l'une quelconque des revendications 6 à 8 d'un berceau (B) notamment conforme à l'une quelconque des revendications 1 à 5, caractérisé en ce qu'on fixe ladite platine (5) par collage sur ledit châssis (C) .
